(19) Europäisches Patentamt
European Patent Office
Office européen des brevets

(11) EP 1 359 408 B1

(12) # EUROPÄISCHE PATENTSCHRIFT

(45) Veröffentlichungstag und Bekanntmachung des Hinweises auf die Patenterteilung:
**18.04.2007 Patentblatt 2007/16**

(51) Int Cl.:
*G01N 21/55* (2006.01) *G01N 27/22* (2006.01)
*G01N 21/43* (2006.01) *B60S 1/08* (2006.01)

(21) Anmeldenummer: **03009905.5**

(22) Anmeldetag: **30.04.2003**

(54) **Vorrichtung und Verfahren zur Detektion von Kondensation an einer Messoberfläche**

Apparatus and method for the detection of condensation on a measurement surface

Dispositif et méthode pour la détection de condensation sur une surface de mesure

(84) Benannte Vertragsstaaten:
**AT BE BG CH CY CZ DE DK EE ES FI FR GB GR HU IE IT LI LU MC NL PT RO SE SI SK TR**

(30) Priorität: **02.05.2002 DE 10219689**

(43) Veröffentlichungstag der Anmeldung:
**05.11.2003 Patentblatt 2003/45**

(73) Patentinhaber: **Ralf Spillecke**
**47249 Duisburg (DE)**

(72) Erfinder: **Ralf Spillecke**
**47249 Duisburg (DE)**

(74) Vertreter: **Viering, Jentschura & Partner**
**Centroallee 263**
**46047 Oberhausen (DE)**

(56) Entgegenhaltungen:
**US-A- 4 317 073**
**US-A- 4 916 374**
**US-A- 5 059 877**
**US-A- 5 386 111**
**US-A- 5 801 307**
**US-A- 5 973 775**
**US-A- 6 118 383**
**US-B1- 6 207 967**
**US-B1- 6 331 819**

EP 1 359 408 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine Vorrichtung zur Detektion von Kondensation an einer Messoberfläche und ein Verfahren zum Betreiben eines Sensors zur Detektion von Kondensation an einer Meßoberfläche.

Die Vorrichtung bzw. das Verfahren ist insbesondere einsetzbar, um eine beginnende Betauung von Oberflächen, wie beispielsweise der Fenster- bzw. Windschutzscheiben von Kraftfahrzeugen, zu ermitteln, um anschließend in Abhängigkeit von dem Ergebnis geeignete Maßnahmen zur Beseitigung der Betauung und z.B. einer damit einhergehenden Sichtbeeinträchtigung - etwa durch entsprechende Steuerung einer Klimaanlage- zu ergreifen. Hierbei ist eine möglichst hohe Empfindlichkeit bei der Detektion der Betauung wünschenswert, damit die erforderlichen Maßnahmen, wie etwa das Einschalten einer Klimaanlage, schnellstmöglich, d.h. insbesondere bereits vor einer visuellen Erkennbarkeit der beginnenden Kondensation, eingeleitet werden können.

Um die Detektion von Kondensation an Oberflächen nachzuweisen, sind verschiedene Technologien bekannt, beispielsweise die Messung der Betauung mittels faseroptischen Sensoren, Impedanzsensoren oder kapazitiven Sensoren.

Das Meßprinzip mittels kapazitiver Sensoren basiert darauf, daß sich bei Einsetzen der Betauung infolge des auf einem Streufeldkondensator auftretenden Feuchtigkeitsniederschlages die Dielektrizitätskonstante $\varepsilon_r$ des Streufeldkondensators und damit seine Kapazität $C = \varepsilon_0 * \varepsilon_r * C_0$ ändert.

Aus DE 101 14 230 A1 ist ein Verfahren und eine Anordnung zur kapazitiven Detektion der Kondensation an Oberflächen bekannt, wobei durch Auswertung der Streufeldkapazität eines auf einem Bauteil angeordneten Betauungssensors Wassertropfen einer Größe zwischen 0,1 $\mu$m und 1000 $\mu$m erfaßt werden und ein wassermassenabhängiges Signal geliefert wird. Aus diesem Signal wird dann die Gesamtkondensationsmenge auf dem Bauteil ermittelt, indem die wassermassenabhängigen Signale für die einzelnen Teilbereiche von Wassertropfengrößen kumulativ erfaßt werden. Die Auswertung erfolgt hierbei vorzugsweise mittels einer in den Betauungssensor integrierten und im übrigen nicht weiter spezifizierten integrierten Signalverarbeitung.

Zum Nachweis der durch die Betauung hervorgerufenen Kapazitätsänderung wird in der Regel die Kapazität des Streufeldkondensators mittels eines Kapazitäts-Frequenz-Wandlers in ein frequenzproportionales Signal umgesetzt, wobei sich die Kapazitätsänderung bei einsetzender Betauung in einem Frequenzhub bemerkbar macht, wie dies beispielsweise aus DE 41 16 322 C2 bekannt ist.

Derartige Vorrichtungen sind jedoch infolge des Einflusses von Zuleitungen, Grundkapazitäten der Meßanordnung etc. bei der Detektion der Betauung ohne zusätzliche Maßnahmen hinsichtlich der erreichbaren Empfindlichkeit unzureichend sowie störanfällig.

Aus DE 43 05 934 A1 ist die Verwendung einer eine Vielzahl von benachbarten Sensoren umfassenden Sensoranordnung bekannt, um einerseits unterschiedliche Empfindlichkeiten zu realisieren und andererseits im Falle des Betriebsausfalls eines Sensors einen Übergang auf einen anderen Sensor zu ermöglichen. Auch hierbei wird jedoch die Komplexität der Meßanordnung beträchtlich erhöht und die Nachweisempfindlichkeit ist weiterhin aufgrund der o.g. Störeinflüsse unzureichend.

Aus DE 32 31 995 C2 ist ein Verfahren zur Messung der Verschmutzung eines kapazitiven Taupunktsensors bekannt, wobei der Phasenwinkel der bei einer Betauung bestehenden Sensorimpedanz als Maß für die Verschmutzung verwendet wird, um bei Überschreitung eines vorbestimmten Verschmutzungsgrenzwertes ein Alarmsignal auszulösen. Hierbei wird der Umstand ausgenutzt, daß der Phasenwinkel der Sensorimpedanz sowohl im trockenen Zustand als auch im verschmutzungsfreien Betauungszustand näherungsweise dem Phasenwinkel eines reinen kapazitiven Blindwiderstandes (d.h. $\phi$ = -90°) entspricht, wohingegen sich bei der Betauung lösende Verschmutzungen infolge der damit einhergehenden Erhöhung der elektrischen Leitfähigkeit des Kondensationswassers zu einer Verringerung des Phasenwinkels führen, was über eine Phasenmeßschaltung nachgewiesen wird. Ferner wird ein Kompensationskondensator verwendet, der zu Beginn der Messung auf einen Wert eingestellt wird, welcher der Trockenkapazität des Taupunktsensors entspricht.

Diese Vorrichtung weist jedoch ebenfalls Nachteile auf. So ist zum einen die Messung des Phasenwinkels der Sensorimpedanz als Maß für die Verschmutzung des Taupunktsensors nur eingeschränkt geeignet, da der Phasenwinkel sowohl durch die Kapazität als auch den Widerstand des Sensors bestimmt wird. Ferner wird der bei dieser Vorrichtung verwendete Kompensationskondensator lediglich vor der eigentlichen Messung auf einen festen, der Trockenkapazität entsprechenden Wert eingestellt. Je nach Einsatzort des Sensors bestehen jedoch zahlreiche Störeinflüsse, welche über eine damit einhergehende Kapazitätsänderung der Anordnung zu Messfehlern führen. Derartige Störeinflüsse sind beispielsweise das Vorhandensein langer Zuleitungen, veränderte Temperatur- oder Druckbedingungen, in der Messanordnung vorhandene Anschlusskapazitäten sowie nicht zuletzt auch Verformungen des Sensors, wie sie etwa an gekrümmten Oberflächen auftreten können und die ebenfalls zu einer Änderung der Kapazität des Sensors, beispielsweise infolge einer Änderung des Abstandes der Kondensatorplatten, führen. Hierdurch wird die Nachweisempfindlichkeit der Anordnung stark beeinträchtigt.

Eine gattungsgemäße Vorrichtung und ein gattungsgemäßes Verfahren sind aus der US 6207967 B1 bekannt. Dieses Dokument offenbart eine Vorrichtung zur optischen Detektion von Kondensation an einer Messoberfläche mit einer gepulsten Lichtquelle, einem Detektor und einer Verarbeitungsschaltung, die einen stationären Signalschwellenwert entsprechend dem kondensationsfreien Zustand mit einem gemessenen Wert vergleicht.

Aufgabe der vorliegenden Erfindung ist es daher, eine Vorrichtung und ein Verfahren zur Detektion von Kondensation an einer Meßoberfläche bereitzustellen, wobei eine möglichst große Nachweisempfindlichkeit erreicht und gleichzeitig die Komplexität der Sensoranordnung und damit der Herstellungsaufwand verringert wird.

Diese Aufgabe wird mit einer Vorrichtung gemäß Anspruch 1 und einem Verfahren gemäß Anspruch 20 gelöst.

Die erfindungsgemäße Vorrichtung zur Detektion von Kondensation an einer Meßoberfläche weist die Merkmale des Anspruches 1 auf. Sie weist u.a. ein Sensorelement zum Liefern eines von einer Feuchtigkeitskondensation auf dem Sensorelement abhängigen Sensorsignals, und an das Sensorelement gekoppelte Auswertemittel zum Auswerten des an der Meßoberfläche gelieferten Sensorsignals und Nachweisen eines Kondensationsvorgangs auf, wobei die Auswertemittel Kompensationsmittel umfassen, mittels derer ein vom Sensorelement im kondensationsfreien Zustand an der Meßoberfläche geliefertes Hintergrundsignal meßbar ist, so daß das gemessene Hintergrundsignal bei der Auswertung des Sensorsignals kompensierbar ist.

Die Auswertemittel sind hierbei zum Auswerten der Sensorsignale durch Integrieren über die Mehrzahl von Meßzyklen ausgelegt, wobei die Auswertemittel Speichermittel zum kumulativen Speichern der Mehrzahl von Sensorsignalen umfassen.

Die Auswertemittel umfassen einen Speicherkondensator zum kumulativen Speichern der von dem Sensorelement während einer Mehrzahl aufeinanderfolgender Lade-/Entladezyklen abfließenden elektrischen Ladung.

Bei der erfindungsgemäßen Vorrichtung kann die aus dem nachzuweisenden Kondensationsvorgang resultierende Änderung des Ausgangssignals des Sensorelements mit hoher Empfindlichkeit nachgewiesen werden, da jegliche Kapazität der Anordnung, die nicht unmittelbar durch den nachzuweisenden Kondensationsvorgang hervorgerufen wird, kompensiert wird. Dadurch, daß eine Kompensation der von Vorrichtung bzw. Meßumgebung verursachten Störgröße durch gezielte Messung des Ausgangssignals im kondensationsfreien Zustand erfolgt, kann die für den Nachweis eines Kondensationsvorganges verwendete und durch die erfindungsgemäße Kompensation im Ausgangssignal erhaltene Meßgröße störgrößenunabhängig bestimmt werden, wobei insbesondere die jeweiligen Temperatur- oder Druckbedingungen am Meßort, die jeweils vorhandene Oberflächengeometrie (z.B. gekrümmte Oberflächen) sowie jegliche zusätzlich vorhandenen und nicht auf den eigentlichen Kondensationsvorgang zurückzuführenden Einflüsse (wie etwa langen Zuleitungen etc.) kompensiert werden. Insbesondere ist die Vorrichtung auch gegenüber etwaigen Verunreinigungen an der zu überwachenden Oberfläche praktisch unempfindlich.

Infolge der signifikanten Vergrößerung der Meßempfindlichkeit sind auch zusätzliche Maßnahmen zur Erhöhung der Empfindlichkeit des Sensorelements entbehrlich. Hierdurch wird die Komplexität des Aufbaus und damit der Herstellungsaufwand des verwendeten Sensorelements signifikant verringert.

Die erfindungsgemäße Vorrichtung kann insbesondere unter Verwendung eines Sensors zur Detektion von Kondensation vorteilhaft eingesetzt werden, wie er in der vom gleichen Anmelder parallel eingereichten deutschen Patentanmeldung "Sensorelement zur Detektion von Kondensation" offenbart ist.

Gemäß einer Ausführungsform weisen die Kompensationsmittel eine Summiereinheit zum Subtrahieren des Hintergrundsignals von dem Sensorsignal auf.

Gemäß einer bevorzugten Ausführungsform ist eine Ablaufsteuereinheit vorgesehen, mittels derer das Sensorelement zu einem wiederholten Liefern von Sensorsignalen während einer Mehrzahl von Meßzyklen ansteuerbar ist.

Hierdurch wird eine zusätzliche Erhöhung der Meßempfindlichkeit der erfindungsgemäßen Vorrichtung für den nachzuweisenden Kondensationsvorgang erreicht, da durch Aufintegration der einzelnen Meßzyklen zum einen die für die Erzeugung des Ausgangssignals der Vorrichtung verwendete Meßgröße vergrößert wird und zum anderen auch eine Mittelwertbildung über eine Mehrzahl von Meßwerten erfolgt.

Gemäß einer weiteren bevorzugten Ausführungsform ist die Ablaufsteuereinheit derart ausgelegt, daß die Speichermittel nach jedem Meßzyklus von dem Sensorelement abkoppelbar sind. Hierdurch wird eine Verminderung der Störanfälligkeit der Vorrichtung erreicht, da eine Verbindung zwischen Speichermittel und Sensorelement nur während der minimal erforderlichen Zeit hergestellt wird und in der Zwischenzeit auftretende etwaige Störungen auf Seiten des Sensorelementes nicht auf das Speichermittel durchschlagen und somit von den Auswertemitteln unberücksichtigt bleiben.

Gemäß einer weiteren bevorzugten Ausführungsform ist ein dem Sensorelement zugeführtes Eingangssignal zur Erzeugung des von einer Feuchtigkeitskondensation auf dem Sensorelement abhängigen Sensorsignals ein gepulstes und/oder moduliertes Eingangssignal. Hierdurch wird eine bessere Unterscheidung des gezielt eingekoppelten Eingangssignals von störenden Hintergrundsignalen ermöglicht.

Eine Auswertevorrichtung zum Auswerten eines von einem Sensorelement zur Detektion von Kondensation an einer Meßoberfläche gelieferten Sensorsignals und Nachweisen eines Kondensationsvorgangs an der Meßoberfläche umfaßt Kompensationsmittel, mittels derer ein vom Sensorelement im kondensationsfreien Zustand an der Meßoberfläche geliefertes Hintergrundsignal meßbar ist, so daß das gemessene Hintergrundsignal bei der Auswertung des Sensorsignals kompensierbar ist.

In einer Ausführungsform umfaßt das Sensorelement einen Streufeldkondensator, und die Auswertemittel sind zur Auswertung der von dem Streufeldkondensator infolge eines elektrischen Lade-/Entladevorganges abfließenden elektrischen Ladung ausgelegt.

Hierbei kann insbesondere eine Umwandlung der gemessenen Kapazität bzw. der Kapazitätsänderungen des Sensorelementes etwa in entsprechende Frequenzsignale mittels Kapazitäts-Frequenz-Wandlern am Ort des Sensors entfallen. Der Nachweis der Betauung erfolgt vielmehr unmittelbar auf Basis der Kapazitätsänderung des Sensorelementes. Infolgedessen sind zusätzliche Umwandlungskomponenten in dem Sensorelement entbehrlich.

Das Sensorelement ist vorzugsweise zur Erzeugung der aufeinanderfolgenden Lade-/Entladezyklen über eine Ablaufsteuereinheit mit einer Wechselspannungsquelle koppelbar. Bei Verwendung der Wechselspannungsquelle werden Migrations-Effekte vermieden bzw. verringert.

Hierbei ist das Sensorelement über die Ablaufsteuereinheit vorzugsweise derart ansteuerbar, daß nur die jeweiligen Scheitelwerte der von der Wechselspannungsquelle gelieferten Spannung an das kapazitive Sensorelement angelegt werden.

Die Ablaufsteuereinheit ist hierbei vorzugsweise derart ausgelegt, daß sie nur die jeweiligen Scheitelwerte der von der Wechselspannungsquelle gelieferten Spannung an das kapazitive Sensorelement anlegt. Alternativ kann die Ablaufsteuereinheit auch so ausgelegt sein, daß sie nur andere, nicht dem Scheitelwert entsprechende Spannungswerte (ungleich Null) an das Sensorelement anlegt.

Gemäß einer Ausführungsform umfassen die Kompensationsmittel einen Summierverstärker, dessen erstem Eingang die in dem Speichermittel gespeicherte Ladung zuführbar ist, wobei ein steuerbares Kompensationsnetzwerk, vorzugsweise ausgeführt als steuerbare Spannungsquelle, vorgesehen ist, welche durch die Ablaufsteuereinheit derart steuerbar ist, daß sie dem zweiten Eingang des Summierverstärkers einen elektrischen Strom bzw. eine elektrische Spannung zuführt, welche dem Produkt der elektrischen Ladung des Sensorelements in dessen kondensationsfreiem Zustand und der Anzahl an aufeinanderfolgenden Lade-/Entladezyklen entspricht. Auf diese Weise ist gewährleistet, daß auch bei Aufintegration der Ladungen in dem Speichermittel über eine Vielzahl von Lade-/Entladevorgängen des Sensorelementes eine vollständige und durch die Ablaufsteuereinheit automatisch geregelte Kompensation der Grundkapazität erreicht wird.

Die Ablaufsteuereinheit ist vorzugsweise derart ausgelegt, daß sie das kapazitive Sensorelement nach jedem Lade-/Entladezyklus von dem Speichermittel trennt. Hierdurch wird eine Verminderung der Störanfälligkeit der Vorrichtung erreicht, da eine elektrische Verbindung zwischen Speichermittel und Sensorelement nur während der minimalen zum Laden des Sensorelementes erforderlichen Zeit hergestellt wird und in der Zwischenzeit auftretende etwaige Störungen auf Seiten des Sensorelementes nicht auf das Speichermittel durchschlagen und somit von den Auswertemitteln unberücksichtigt bleiben.

Das erfindungsgemäße Verfahren weist die Merkmale des Anspruches 20 auf. Bei dem erfindungsgemäßen Verfahren zum Betreiben eines Sensors zur Detektion von Kondensation an einer Meßoberfläche wird u.a ein von einem Sensorelement in Abhängigkeit von einer Feuchtigkeitskondensation auf dem Sensorelement am Meßort geliefertes Sensorsignal zum Nachweis eines Kondensationsvorganges ausgewertet, wobei ein vom Sensorelement im kondensationsfreien Zustand am Meßort geliefertes Hintergrundsignal gemessen wird und das gemessene Hintergrundsignal bei der Auswertung des Sensorsignals kompensiert wird.

Grundsätzlich sind hinsichtlich der Elektroden des kapazitiven Sensorelementes beliebige Elektrodenformen denkbar. Vorzugsweise weist das Sensorelement jedoch Elektroden mit im wesentlichen trapezförmigem Querschnitt auf, wodurch der Wert des elektrischen Feldes in zur Elektrodenebene senkrechter Richtung vergrößert und somit eine Optimierung des elektrischen Feldes erreicht wird. Hierdurch wird die Empfindlichkeit weiter gesteigert.

Die Elektroden des kapazitiven Sensorelements können auf der Innenseite einer Kraftfahrzeug-Scheibe, einem Kraftfahrzeug-Innenspiegel oder -Außenspiegel oder auch in Scheinwerfern befestigt sein, indem beispielsweise eine das Sensorelement tragende Trägerfolie (wie oben beschrieben) an der betreffenden Oberfläche aufgeklebt wird.

Die Erfindung eignet sich jedoch auch für eine Vielzahl anderer Anwendungen, bei denen es auf eine Detektion von Kondensationsvorgängen mit hoher Empfindlichkeit in feuchtigkeitsanfälligen Vorrichtungen ankommt, beispielsweise zum Nachweis der Feuchtigkeitsentstehung in elektronischen Schaltungen oder Geräten wie Kameras oder dergleichen.

Ferner eignet sich die Erfindung grundsätzlich auch zur Taupunktbestimmung bzw. zur quantitativen Bestimmung relativer Feuchte. Hierbei macht die Erfindung sich die Tatsache zunutze, daß die Dielektrizitätskonstante proportional zur mittleren Dipoldichte (z.B. der Wassermoleküle) ist, so daß die Vorrichtung ein wassermassenabhängiges Signal liefert. In Verbindung beispielsweise mit einem Peltierelement ist auf diese Weise insbesondere ein Taupunktsensor für eine Klimasimulationsanlage realisierbar.

Ferner eignet sich die Erfindung zur Bestimmung der Fließeigenschaften von nichtleitfähigen, fließfähigen Materialien, insbesondere zur Viskositätsbestimmung von Kunststoffschmelzen, sowie ganz allgemein zur Detektion polarer Moleküle.

Die Erfindung wird nachstehend anhand von in den beigefügten Abbildungen dargestellten Ausführungsbeispielen näher erläutert.

Es zeigen:

Fig. 1 ein Blockschaltbild der erfindungsgemäßen Vorrichtung gemäß einer bevorzugten Ausführungsform unter Verwendung eines kapazitiven Sensors; und

Fig. 2 ein Blockschaltbild der erfindungsgemäßen Vorrichtung gemäß einer bevorzugten Ausführungsform unter Verwendung eines faseroptischen Sensors.

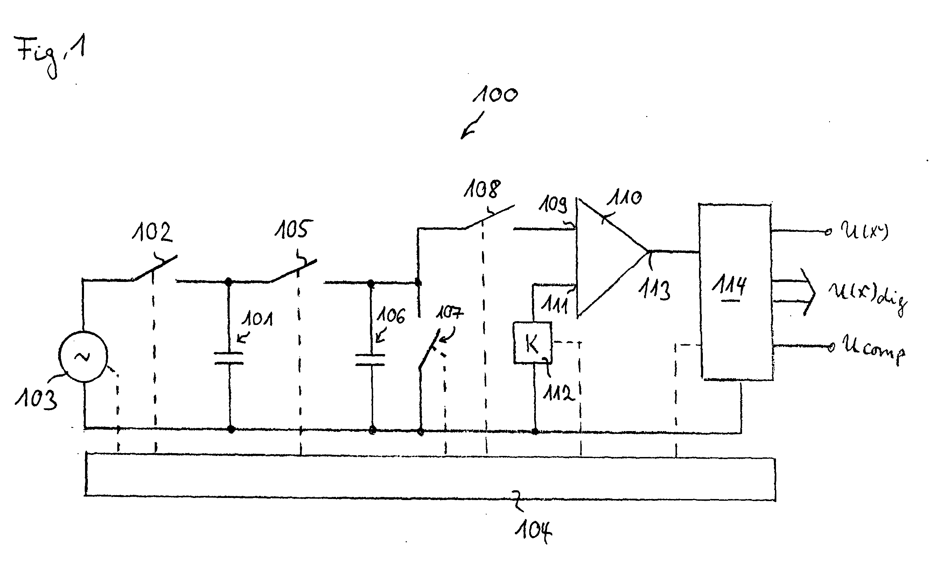

Gemäß Fig. 1 ist ein Blockschaltbild 100 einer erfindungsgemäßen Vorrichtung zur Detektion von Kondensation an Oberflächen gemäß einem bevorzugten Ausführungsbeispiel dargestellt. Die Schaltung ist vorzugsweise als integrierte Schaltung ausgebildet.

Die Vorrichtung weist ein kapazitives Sensorelement in Form eines Streufeldkondensators 101 auf, wobei ein erster Anschluß des Streufeldkondensators 101 über einen ersten Schalter 102 mit einer Wechselspannungsquelle 103 und ein zweiter Anschluß des Streufeldkondensators 101 direkt mit der Wechselspannungsquelle 103 verbunden ist. Der Schalter 102 ist ebenso wie die weiteren im folgenden beschriebenen Schalter vorzugsweise als elektronischer Schalter ausgeführt. Der erste Schalter 102 und die Wechselspannungsquelle 103 werden über eine Ablaufsteuereinheit 104 angesteuert.

Parallel zu dem Streufeldkondensator 101, und von diesem über einen ebenfalls durch die Ablaufsteuereinheit 104 angesteuerten zweiten Schalter 105 trennbar, ist ein Speicherkondensator 106 geschaltet, wobei der erste Anschluß des Streufeldkondensators 101 über den zweiten Schalter 105 mit einem ersten Anschluß des Speicherkondensators 106 verbunden und der zweite Anschluß des Streufeldkondensators 101 direkt mit dem zweiten Anschluß des Speicherkondensators 106 verbunden ist. Ein dem Speicherkondensator 106 parallel geschalteter dritter Schalter 107 dient (in seiner geschlossenen Stellung) zum Kurzschließen des Speicherkondensators 106 und wird durch die Ablaufsteuereinheit 104 angesteuert. Die Kapazität des Speicherkondensators 106 sollte vorzugsweise groß gewählt sein, d.h. ihr Wert sollte wesentlich größer als die durch Kondensationsvorgänge hervorgerufenen Kapazitätsänderungen des Streufeldkondensators 101 sein.

Der erste Anschluß des Speicherkondensators 106 ist über einen ebenfalls durch die Ablaufsteuereinheit 104 angesteuerten vierten Schalter 108 mit einem ersten Eingang 109 eines Summierverstärkers 110 verbunden. Mit einem zweiten Eingang 111 des Summierverstärkers 110 ist ein erster Anschluß eines Kompensationsnetzwerks 112 verbunden, welches von der Ablaufsteuereinheit 104 angesteuert wird. Das Kompensationsnetzwerk 112 kann beispielsweise einen Speicherkondensator und eine steuerbare Spannungsquelle (jeweils nicht dargestellt) umfassen, wobei ein erster Anschluß des Speicherkondensators mit dem zweiten Eingang 111 des Summierverstärkers 110 verbunden ist und wobei der zweite Anschluß des Speicherkondensators mit der über die Ablaufsteuereinheit 104 angesteuerten steuerbaren Spannungsquelle verbunden ist, so daß durch den Speicherkondensator - gemäß Ansteuerung der steuerbaren Spannungsquelle durch die Ansteuereinheit 104 - eine von der Ansteuereinheit 104 eingestellte Ladung an den zweiten Eingang 111 des Summierverstärkers 110 geliefert wird.

Der Ausgang 113 des Summierverstärkers 110 wird einer ebenfalls durch die Ablaufsteuereinheit 104 angesteuerten Signalverarbeitungseinheit 114 zugeführt, welche gemäß dem Ausführungsbeispiel einen Analog-Digital-Wandler und einen Komparator (beides nicht dargestellt) aufweist, so daß mittels der Signalverarbeitungseinheit 114 zusätzlich zu einem analogen Ausgangsspannungssignal U(x) ein digitales Ausgangssignal $U(x)_{dig}$ sowie ein Komparatorsignal $U_{comp}$ erzeugbar ist, wie im folgenden näher erläutert wird.

Der nachfolgend erläuterte Betrieb der erfindungsgemäßen Vorrichtung beginnt in einem Zustand, in dem der kapazitive Sensor bereits am Meßort angeordnet und damit insbesondere den spezifischen Bedingungen der Meßumgebung ausgesetzt ist (z.B. durch Befestigung an einer gekrümmten zu überwachenden Oberfläche oder durch die jeweils vorhandenen Temperatur- bzw. Druckbedingungen, am Meßort vorhandene lange Zuleitungen sowie ggf. vorhandene Verschmutzungen an der Sensoroberfläche), wobei jedoch noch keine Feuchtigkeitskondensation eingetreten ist. In diesem kondensationsfreien Zustand ist der Streufeldkondensator 101 frei von jeglicher Betauung, beispielsweise von einfallenden Wassermolekülen.

In diesem Zustand wird zunächst das Sensorsignal des kapazitiven Sensors, d.h. die Kapazität des Streufeldkondensators 101 in dessen kondensationsfreiem Zustand, bestimmt und an das Kompensationsnetzwerk 112 übertragen. Diese Kapazität wird im folgenden als Grundkapazität $C_0$ des Streufeldkondensators 101 bezeichnet und ist nicht nur vom jeweiligen Aufbau des Streufeldkondensators 101, sondern auch von dessen Umgebung am jeweiligen Meßort, d.h. insbesondere dem Einfluß vorhandener langer Zuleitungen (Anschlußkabel etc) sowie anderer der o.g. Faktoren abhängig. Im Grundzustand befindet sich der zweite Schalter 107 in der geschlossenen Position, so daß der kurzgeschlossene Speicherkondensator 106 vollständig entladen ist. Die übrigen Schalter 102, 105 und 108 befinden sich in der geöffneten Position. Die Messung der Grundkapazität $C_0$ des Streufeldkondensators 101 erfolgt vorzugsweise dadurch, daß die Spannungsquelle 103 durch kurzzeitiges Schließen des Schalters 102 bei Erreichen eines definierten Spannungswertes der Wechselspannungsquelle 103, insbesondere z.B. bei Erreichen deren Spannungsmaximums $U_{max}$, mit dem Streufeldkondensator 101 verbunden wird. Infolgedessen wird der Streufeldkondensator 101 auf einen Ladungswert $Q_0$ aufgeladen, der dem Produkt aus seiner Grundkapazität $C_0$ und dem angelegten Spannungswert $U_{max}$ entspricht, woraufhin der Ladungswert $Q_0$ an das Kompensationsnetzwerk 112 übertragen wird.

Zur Detektion eines Kondensationsvorganges wird wiederum durch kurzzeitiges Schließen des ersten Schalters 102, vorzugsweise bei Erreichen des Spannungsmaximums $U_{max}$ der Wechselspannungsquelle 103 gemäß Steuerung durch die Ablaufsteuereinheit 104, bei geöffnetem zweiten Schalter 105 sowie geöffnetem dritten Schalter 107 eine Spannung $U_{max}$ über die Wechselspannungsquelle 103 an den Streufeldkondensator 101 angelegt. Infolgedessen wird der Streufeldkondensator 101 auf einen Ladungswert Q(x) aufgeladen, der dem Produkt aus seiner Kapazität C(x) und dem angelegten Spannungswert $U_{max}$entspricht.

$$Q(x) = C(x) * U_{max}.$$

Da sich bei dem Kondensationsvorgang die Dielektrizitätskonstante $\varepsilon_r$ im Streufeld des Streufeldkondensators 101 infolge der zusätzlich vorhandenen Flüssigkeitsmoleküle gegenüber dem kondensationsfreien Zustand ändert, gilt für die Kapazität des Streufeldkondensators 101 die Beziehung

$$C(x) = C_0 + \Delta C(x)$$

wobei $C_0$ die oben beschriebene Grundkapazität und $\Delta C$ (x) die durch den Einfluß des Kondensationsvorganges verursachte Kapazitätsänderung des Streufeldkondensators 101 bezeichnet.

Anschließend wird durch Öffnen des ersten Schalters 102 und Schließen des zweiten Schalters 105 mittels der Ablaufsteuerung 104 die auf dem Streufeldkondensator 101 angesammelte Ladung auf den Speicherkondensator 106 übertragen, d.h. umgespeichert. Daraufhin wird der zweite Schalter 105 wieder geöffnet und der erste Schalter 102 wieder (wie oben beschrieben) im Spannungsmaximum $U_{max}$ der Wechselspannungsquelle 103 geschlossen, um den Streufeldkondensator 101 erneut aufzuladen, woraufhin diese Ladung erneut durch Öffnen des Schalters 102 und Schließen des Schalters 105 von dem Streufeldkondensator 101 auf den Speicherkondensator 106 übertragen bzw. umgespeichert wird.

Durch mehrfaches (im folgenden n-maliges) Wiederholen der Lade-/Entladezyklen des Streufeldkondensators 101 wird die auf dem Speicherkondensator 106 befindliche Ladung $Q_S$ auf einen Wert

$$Q_s = n * Q(x)$$

erhöht, wobei Q(x) die durch einmaliges Aufladen des Streufeldkondensators 101 auf diesen aufgebrachte Ladung bezeichnet (hierbei gilt jeweils $Q(x) = C(x) * U_{max}$).

Je größer der Wert n gewählt wird, um so größer ist die auf dem Speicherkondensator angesammelte Ladung $Q_s$. Da dieses kumulative Speichern der von dem Streufeldkondensator 101 abfließenden Ladung einer Integration über mehrere Lade-/Entladezyklen gleichkommt, wird - wie im folgenden beschrieben - hierdurch eine Mittelwertbildung hinsichtlich der gemessenen, durch den Kondensationsvorgang hervorgerufenen Kapazitätsänderung erreicht, wodurch die Empfindlichkeit der Anordnung weiter erhöht wird.

Nach Erreichen der vorbestimmbaren Anzahl n von Lade-/Entladezyklen des Streufeldkondensators 101 wird die auf dem Speicherkondensator 106 angesammelte Ladungsmenge $Q_s = n * Q(x)$ gemäß Steuerung durch die Steuerungseinheit 104 durch Schließen des vierten Schalters 108 dem ersten Eingang 109 des Summierverstärkers 110 zugeführt, wobei es in ein entsprechendes, der Ladungsmenge $Q_s$ proportionales Spannungsoder Stromsignal umgewandelt wird.

Außerdem wird von dem Kompensationsnetzwerk 112 dem zweiten Eingang 111 des Summierverstärkers 110 ein durch das steuerbare Kompensationsnetzwerk 112 entsprechend eingestelltes, der Ladung $Q' = n * Q_0$ (mit $Q_0 = C_0 * U_{max}$) proportionales Spannungssignal U' oder, je nach Ausgestaltung des Kompensationsnetzwerks 112, ein dieser Ladung Q' proportionales Stromsignal I' zugeführt.

Der Summierverstärker 110 subtrahiert die an den Eingängen 109 und 111 anliegenden elektrischen Größen (entsprechend den Ladungsmengen $Q_s$ bzw. $n*Q_0$) voneinander und liefert an seinem Ausgang 113 ein entsprechendes Differenzsignal U(x), welches der Signalverarbeitungseinheit 114 zugeführt wird.

Die Signalverarbeitungseinheit 114 erzeugt aus dem Differenzsignal U(x) mittels des Analog-Digital-Wandlers ein digitales Ausgangssignal $U(x)_{dig}$ sowie mittels des Komparators durch Vergleich mit einem vorgegebenen Schwellenwert ein Komparatorsignal $U_{comp}$, welches als Indikatorsignal für den Kondensationsvorgang dient und beispielsweise zur entsprechenden Ansteuerung einer Klimaanlage verwendet werden kann.

Alternativ kann die Schaltung der Vorrichtung auch so ausgestaltet sein, daß - statt einer Integration über n Lade-Entladevorgänge vor Übermittlung der erhaltenen Signale an den Summierverstärker 110 - eine Kompensation durch Subtraktion des der Grundkapazität entsprechenden Signals in dem Summierverstärker 110 nach jedem einzelnen Lade-/Entladezyklus des Streufeldkondensators 101 vorgenommen wird. Eine Aufintegration über mehrere so erhaltene Differenzsignale kann dann beispielsweise direkt in der Signalverarbeitungseinheit 114 erfolgen.

Wie oben erläutert, wird infolge der Kompensation der Grundkapazität des Streufeldkondensators 101 auch eine relativ zur Grundkapazität $C_0$ geringe Kapazitätsänderung des Sensorelements infolge eines Kondensationsvorganges mit sehr hoher Empfindlichkeit nachgewiesen, wobei jegliche zusätzlich vorhandenen Störgrößen am Meßort, z.B. aufgrund von Zuleitungen, Verschmutzungen sowie der jeweiligen Oberflächengeometrie, etwa bei gekrümmten Oberflächen, kompensiert werden.

Außerdem wird durch die oben beschriebene Aufintegration über mehrere Meßzyklen eine weitere Erhöhung der Empfindlichkeit erreicht, da zum einen Mittelwertbildung über eine Mehrzahl von einzelnen Meßwerten erfolgt und zum anderen die letztendlich zur Erzeugung des Indikatorsignals für den Kondensationsvorgang verwendete Meßgröße vergrößert wird.

Obwohl die Grundkapazität des Streufeldkondensators in der Größenordnung beispielsweise 20-30 pF betragen kann und die weiteren, auf lange Zuleitungen am Meßort zurückzuführenden Kapazitäten in der Größenordnung von etwa 100 pF liegen können, lassen sich auf diese Weise durch eine Kondensation bewirkte Kapazitätsänderungen von weniger als 0,1 pF mit großer Empfindlichkeit nachweisen. Maßnahmen zur Beseitigung der Kondensation können folglich bereits zu einem Zeitpunkt eingeleitet werden, zu dem eine Betauung visuell noch nicht erkennbar ist. Da zusätzliche Komponenten wie Kapazitäts-Frequenz-Wandler oder zusätzliche Schichten der Erhöhung der Empfindlichkeit entbehrlich sind, wird zudem die Komplexität des Aufbaus und damit der Herstellungsaufwand signifikant verringert.

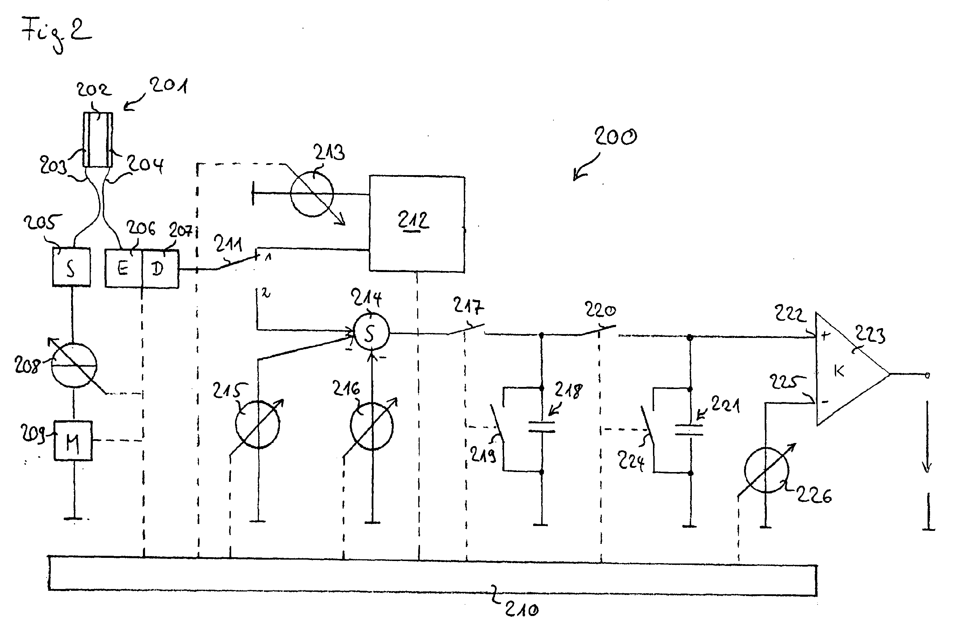

In Fig. 2 ist ein Blockschaltbild 200 der erfindungsgemäßen Vorrichtung gemäß einer weiteren bevorzugten Ausführungsform dargestellt.

Diese Vorrichtung weist ein optisches Sensorelement 201 auf, bei dem wie nachfolgend erläutert eine Feuchtigkeitskondensation mittels Auswertung einer Änderung des Lichttransmissionskoeffizienten zwischen einer dem Sensorelement 201 zugeordneten Lichtsendeeinheit und einer Lichtempfängereinheit bestimmbar ist.

Das Sensorelement gemäß dem dargestellten Ausführungsbeispiel weist einen Sensorabschnitt 202 von im wesentlichen rechteckigem Querschnitt auf, an dessen einander gegenüberliegenden Längsseiten zwei Lichtwellenleiter 203, 204 parallel zueinander angeordnet sind. Das Trägerelement kann jedoch auch eine beliebige andere, von der rechteckigen Form abweichende Geometrie aufweisen.

Der Sensorabschnitt ist als die Form einer dünnen Schicht aufweisendes Trägerelement aus einem optisch transparenten und vorzugsweise flexiblen Material ausgebildet, beispielsweise aus einem Polymermaterial, welches Polyimid, Phenolharz, glasfaserverstärktes Phenolharz, Polyolefin, Polycarbonat, Celluloseacetat oder Mischungen davon aufweist, wie dies in der parallel von demselben Anmelder eingereichten deutschen Patentanmeldung "Sensorelement zur Detektion von Kondensation" beschrieben ist.

Die Schaltungsanordnung gemäß Fig. 2 ist jedoch auch unter Verwendung eines beliebigen anderen bekannten faseroptischen Kondensationssensors realisierbar sowie grundsätzlich in jeder Meßanordnung, bei der eine Kondensationsdetektion mittels Auswertung einer Änderung des Lichttransmissionskoeffizienten zwischen einer Lichtsendeeinheit und einer Lichtempfängereinheit erfolgt.

Gemäß Fig. 2 ist der erste Lichtwellenleiter 203 als in das Trägerelement bzw. den Sensorabschnitt 202 teilweise eingebettetes Glasfaserkabel ausgebildet und an eine Lichtquelle 205 angeschlossen. Der zweite Lichtwellenleiter 204 ist ebenfalls als in das Trägerelement bzw. den Sensorabschnitt 202 teilweise eingebettetes Glasfaserkabel ausgebildet und an einen Lichtdetektor 206, beispielsweise eine Photodiode, angeschlossen.

Die Lichtquelle 205 kann hinsichtlich der Emissionscharakteristik und -wellenlänge beliebig ausgestaltet sein, wobei gemäß dem dargestellten Ausführungsbeispiel zur Reduzierung des störenden Einflusses von Fremdlicht eine modulierte Infrarot-Lichtquelle verwendet wird. Zur Modulation des von der Lichtquelle 205 emittierten Lichts ist die Lichtquelle 205 über eine steuerbare Stromquelle 208 an einen Modulator 209 angeschlossen. Dem Lichtdetektor 206 ist zur Demodulation des empfangenen Signals ein optischer Demodulator 207 nachgeschaltet.

Die steuerbare Stromquelle 208, der Modulator 209, der Lichtdetektor 206 und der Demodulator 207 sind über eine Ablaufsteuereinheit 210 ansteuerbar, wie weiter unten näher erläutert wird.

Gemäß Fig. 2 ist die aus dem Lichtdetektor 206 und dem Modulator 207 gebildete Empfängereinheit über einen Schalter 211 in einer ersten Schalterstellung "1" an eine Störgrößenüberwachungseinheit 212 koppelbar, welche an eine von der Ablaufsteuereinheit 210 steuerbare Referenzspannungsquelle 213 angeschlossen ist. Der Schalter 211 ist ebenso wie die weiteren nachfolgend genannten Schalter vorzugsweise als elektronischer Schalter ausgebildet.

In einer zweiten Schalterstellung "2" des Schalters 211 ist die aus Lichtdetektor 206 und Modulator 207 gebildete Lichtempfängereinheit an eine Summiereinheit 214 koppelbar, welche an eine erste mittels der Ablaufsteuereinheit 210 ansteuerbare Spannungsquelle 215 und eine zweite, ebenfalls mittels der Ablaufsteuereinheit 210 ansteuerbare Spannungsquelle 216 angeschlossen ist.

Die Summiereinheit 214 ist über einen zweiten elektronischen Schalter 217 mit einem ersten Anschluss eines Kondensators 218 elektrisch koppelbar. Der zweite Anschluss des Kondensators 218 ist geerdet, wobei ein zu dem Kondensator 218 parallel geschalteter dritter Schalter 219 zum Kurzschließen des Kondensators 218 dient und ebenfalls durch die Ablaufsteuereinheit 210 angesteuert wird. Der erste Anschluss des Kondensators 218 ist über einen ebenfalls durch die Ablaufsteuereinheit 210 angesteuerten vierten Schalter 220 mit einem ersten Anschluss eines Speicherkondensators 221 sowie mit einem ersten Eingang 222 eines Komparators 223 verbunden. Der zweite Anschluss des Speicherkondensators 221 ist geerdet, wobei ein wiederum zu dem Speicherkondensator 221 parallel geschalteter fünfter Schalter 224 zum Kurzschließen des Speicherkondensators 221 dient. Die Kapazität des Speicherkondensators 221 sollte vorzugsweise groß gewählt sein, d.h. der Wert sollte wesentlich größer als die Kapazität des Kondensators 218 sein.

Ein zweiter Eingang 225 des Komparators 223 ist mit einer ebenfalls durch die Ablaufsteuereinheit 210 ansteuerbaren Spannungsquelle 226 elektrisch verbunden.

Im Betrieb der in Fig. 2 dargestellten Vorrichtung wird zunächst, analog zu der anhand von Fig. 1 beschriebenen ersten Ausführungsform, eine durch die Vorrichtung selbst sowie durch die Messumgebung hervorgerufene Störgröße bestimmt, wobei die eine Kompensiereinheit darstellenden steuerbaren Spannungsquellen 215 und 216 entsprechend diesen Störeinflüssen auf definierte Spannungspegel aufgeladen werden. Die hierbei zu kompensierenden Störeinflüsse umfassen zum einen den Einfluss von sogenanntem Fremdlicht, welches sämtliches, nicht von der Lichtquelle 205 erzeugtes Licht umfasst. Die steuerbare Spannungsquelle 215 dient zur Erzeugung eines hierzu proportionalen Spannungswertes $U_F$.

Bei der weiteren zu kompensierenden Störgröße handelt es sich um die sogenannte "Grunddämpfung", welche sämtliche Störeinflüsse umfasst, die durch eine Verschmutzung am Sensorelement sowie durch den Einfluss der Messgeometrie verursacht werden. Hiervon sind insbesondere auch Einflüsse aufgrund der Oberflächengeometrie am Messort, etwa an gekrümmten Oberflächen, umfasst. Ferner zählen hierzu auch etwaige Störeinflüsse infolge von Vibrationen, denen das Sensorelement ausgesetzt ist (etwa verursacht durch Motorvibrationen). Die steuerbare Spannungsquelle 216 dient zur Erzeugung eines der diesen Störgrößen proportionalen Spannungswertes $U_G$.

Der nachfolgend erläuterte Betrieb der in Fig. 2 gezeigten Ausführungsform beginnt wiederum - analog zu der anhand von Fig. 1 beschriebenen Ausführungsform - in einem Zustand, in dem der Sensor 201 bereits am Meßort angeordnet und damit insbesondere den spezifischen Bedingungen der Meßumgebung ausgesetzt ist (z.B. durch Befestigung an einer gekrümmten Meßoberfläche oder durch die jeweils vorhandenen Temperatur- bzw. Druckbedingungen, am Meßort vorhandene lange Zuleitungen sowie ggf. vorhandene Verschmutzungen an der Sensoroberfläche), wobei jedoch noch keine Feuchtigkeitskondensation eingetreten ist. In diesem kondensationsfreien Zustand ist das Sensorelement 201 frei von jeglicher Betauung, beispielsweise von einfallenden Wassermolekülen.

Um die steuerbaren Spannungsquellen 215, 216 auf die Spannungswerte $U_F$, $U_G$ einzustellen, befindet sich zunächst der erste Schalter 211 in der Schalterstellung "1", wobei er die aus Lichtdetektor 206 und Demodulator 207 gebildete Lichtempfängereinheit mit der Störgrößenüberwachungseinheit 212 elektrisch verbindet. Der zweite Schalter 217 und der vierte Schalter 220 befinden sich (mittels Ansteuerung durch die Ansteuereinheit 210) in der geöffneten Position, und der dritte Schalter 219 sowie der fünfte Schalter 224 sind zum Kurzschließen der Kondensatoren 218, 221 geschlossen.

Zur Erfassung des Fremdlichtpegels ist zunächst die steuerbare Stromquelle 208 ausgeschaltet, so dass die Lichtquelle 205 kein Licht in den Lichtwellenleiter 203 des Sensorelements 201 einkoppelt. Das von dem zweiten Lichtwellenleiter 204 in diesem Zustand an den Lichtdetektor 206 geleitete Licht ist somit Fremdlicht, und die steuerbare Spannungsquelle 215 wird gemäß Ansteuerung durch die Ablaufsteuereinheit 210 auf einen hierzu proportionalen Spannungswert $U_F$ eingestellt.

Zur Bestimmung der Grunddämpfung wird der von der steuerbaren Spannungsquelle 208 an die Lichtquelle 205 gelieferte Strom auf einen Wert ungleich Null eingestellt, so dass die Lichtquelle 205 Licht über den Lichtwellenleiter 203 in das Trägerelement 202 des optischen Sensors 201 einkoppelt.

Da sich die Vorrichtung noch im kondensationsfreien Zustand befindet, ist die von dem Lichtdetektor 206 in diesem Zustand empfangene Lichtintensität (außer auf das oben genannte Fremdlicht) auf die oben beschriebenen Störeinflüsse wie Verschmutzungseffekte oder Einflüsse der Geometrie am Messort zurückzuführen, da diese Einflüsse dazu führen, dass ein Teil des von dem Lichtwellenleiter 203 ausgehenden Lichts mittels Brechung oder Reflexion an der Oberfläche des Trägerelements 202 bzw. an dort befindlichen Verschmutzungspartikeln in den Lichtwellenleiter 204 gelangt und von dort an den Lichtdetektor 206 übertragen wird.

Die in diesem Zustand vom Lichtdetektor 206 empfangene Lichtintensität wird wiederum in einen entsprechenden äquivalenten Spannungswert umgerechnet, der um den obigen, auf den Fremdlichtpegel zurückzuführenden Spannungswert $U_F$ reduziert wird. Der so erhaltene, die Grunddämpfung beschreibende Spannungswert $U_G$ wird mittels der Ablaufsteuereinheit 210 an die steuerbare Spannungsquelle 216 übertragen.

In einem nächsten Schritt wird gemäß einer bevorzugten Ausführungsform der ermittelte, den Fremdlichteinfluss beschreibende Spannungswert $U_F$ in der Störgrößenüberwachungseinheit 212 mit einem Referenzspannungswert $U_{refmax}$ verglichen, welcher von der durch die Ablaufsteuereinheit 210 angesteuerten Spannungsquelle 213 an die Störgrößenüberwachungseinheit 212 übertragen wird. Um eine infolge eines übergroßen Fremdlichtanteils zu stark fehlerbehaftete Messung zu verhindern, erfolgt gemäß der bevorzugten Ausführungsform eine Freigabe des weiteren Messvorgangs nur, wenn die Bedingung $U_F \leq U_{Refmax}$ erfüllt ist. Eine solche bedingte Freigabe des weiteren Meßvorgangs ist somit bevorzugt, jedoch nicht unbedingt für die Funktion der Vorrichtung erforderlich.

Falls die Bedingung $U_F \leq U_{Refmax}$ erfüllt ist, wird im nächsten Schritt der Schalter 211 in die Schalterstellung "2" gebracht, in welcher er die aus Lichtdetektor 206 und Demodulator 207 gebildete Lichtempfängereinheit mit der Summiereinheit 214 elektrisch verbindet. Gleichzeitig wird die Lichtquelle 205 mittels Einspeisung eines Stroms über die Stromquelle 208 eingeschaltet.

Im Falle einer Betauung der Oberfläche des Sensorelements 201 wird ein zunehmender Anteil des aus dem Lichtwellenleiter 203 ausgekoppelten Lichtes an der Grenzfläche zwischen dem Trägerelement 202 und der sich an dessen Oberfläche ausbildenden Flüssigkeitsschicht in das Trägerelement 202 zurückgestreut. Dieses Licht gelangt nach Mehrfachreflexion (insbesondere Totalreflexion) an der Flüssigkeitsschicht in den Lichtdetektor 206, so dass die dort nachgewiesene Lichtintensität ansteigt. Der zu dieser im Lichtdetektor 206 empfangenen Lichtintensität äquivalente Spannungswert $U_E$ wird an die Summiereinheit 214 übertragen, wo die aus den Spannungsquellen 215, 216 zugeführten Spannungswerte $U_F$ und $U_G$ subtrahiert werden, so daß ein Differenzsignal
$U_X = U_E - U_F - U_G$ erzeugt wird.

Im nächsten Schritt wird durch Schließen des zweiten Schalters 217 und Öffnen des dritten Schalters 219 der Kondensator 218 (mit Kapazität C)auf eine dem Spannungswert $U_X$ entsprechende Ladung $Q_X = C * U_X$ aufgeladen. Anschließend wird die Ladung $Q_X$ durch Öffnen des zweiten Schalters 217, Schließen des vierten Schalters 220 und Öffnen des fünften Schalters 224 auf den Speicherkondensator 221 umgespeichert.

Durch mehrfaches (im folgenden n-maliges) Wiederholen der Lade-/Entladezyklen des Kondensators 218 (analog zu der anhand von Fig. 1 beschriebenen Ausführungsform) wird die auf den Speicherkondensator 221 übertragene elektrische Ladung auf einen Wert

$$Q_S = n * Q_X$$

erhöht, so dass die auf dem Speicherkondensator angesammelte Ladung $Q_S$ um so größer ist, je größer der Wert n gewählt wird. Da dieses kumulative Speichern der von dem Kondensator 218 abfließenden Ladung einer Integration über mehrere Lade-/Entladezyklen gleichkommt, wird hierdurch wiederum eine Mittelwertbildung über mehrere Messvorgänge erreicht, wodurch die Empfindlichkeit der Anordnung weiter erhöht wird.

Nach Erreichen der vorbestimmten Anzahl (n) von Lade-/Entladezyklen des Kondensators 218 wird die auf dem Speicherkondensator 221 angesammelte Ladungsmenge $Q_S = n * Q_X$ gemäß Steuerung durch die Ablaufsteuereinheit 210 dem ersten Eingang 222 des Komparators 223 als ein der Ladung $Q_S$ entsprechendes Spannungssignal $U_S$ zugeführt. Im Komparator 223 wird das Spannungssignal $U_S$ mit einem über den zweiten Eingang 224 von der Spannungsquelle 225 zugeführten Schwellenwert $U_B$ verglichen. Wenn die Bedingung $U_S \geq U_B$ erfüllt ist, gibt eine dem Komparator 223 nachgeschaltete (nicht dargestellte) Anzeigeeinheit (analog zu Fig. 1) entsprechend einem von dem Komparator 223 zugeführten Indikatorsignal die Meldung aus, wonach eine Betauung erfolgt ist.

Alternativ kann auch eine Aufintegration direkt bezüglich der von der Empfängereinheit gelieferten Spannungswerte $U_E$ über eine Mehrzahl n von Meßzyklen erfolgen, in welchem Falle dann bereits in der Summiereinheit 214 eine Subtraktion der entsprechend mit dem Faktor n multiplizierten Störgrößen $U_F$ und $U_G$ erfolgt.

Bezugszeichenliste

| | |
|---|---|
| 100 | Blockschaltbild |
| 101 | Streufeldkondensator |
| 102 | erster Schalter |
| 103 | Wechselspannungsquelle |
| 104 | Ablaufsteuereinheit |
| 105 | zweiter Schalter |
| 106 | Speicherkondensator |
| 107 | dritter Schalter |
| 108 | vierter Schalter |
| 109 | erster Eingang / Summierverstärker |
| 110 | Summierverstärker |
| 111 | zweiter Eingang / Summierverstärker |
| 112 | Kompensationsnetzwerk |
| 113 | Ausgang / Summierverstärker |
| 114 | Signalverarbeitungseinheit |
| 200 | Blockschaltbild |
| 201 | Sensorelement |
| 202 | Sensorabschnitt |
| 203 | Lichtwellenleiter |
| 204 | Lichtwellenleiter |
| 205 | Lichtquelle |
| 206 | Lichtdetektor |
| 207 | Demodulator |
| 208 | Stromquelle |
| 209 | Modulator |
| 210 | Ablaufsteuereinheit |
| 211 | erster Schalter |
| 212 | Störgrößenüberwachungseinheit |
| 213 | Referenzspannungsquelle |
| 214 | Summiereinheit |
| 215 | Spannungsquelle |

216 Spannungsquelle
217 zweiter Schalter
218 Kondensator
219 dritter Schalter
220 vierter Schalter
221 Speicherkondensator
222 erster Eingang / Komparator
223 Komparator
224 fünfter Schalter
225 zweiter Eingang / Komparator
226 Spannungsquelle

**Patentansprüche**

**1.** Vorrichtung zur Detektion von Kondensation an einer Messoberfläche, mit einem Sensorelement (101, 201) zum Liefern eines von einer Kondensation auf der Messoberfläche abhängigen Sensorsignals, und an das Sensorelement (101, 201) gekoppelten Auswertemitteln zum Auswerten eines von der Messoberfläche gelieferten Sensorsignals und Nachweisen eines Kondensationsvorgangs, wobei die Auswertemittel Kompensationsmittel umfassen, mittels derer ein vom Sensorelement im kondensationsfreien Zustand an der Messoberfläche geliefertes Hintergrundsignal messbar ist, so dass das gemessene Hintergrundsignal bei der Auswertung des Sensorsignals kompensierbar ist,
**dadurch gekennzeichnet, dass**
die Auswertemittel weiterhin Speichermittel umfassen zum kumulativen Speichern des von dem Sensorelement (101, 201) gelieferten Sensorsignals, mittels derer das von dem Sensorelement (101, 201) gelieferte Sensorsignal über mehrere Messzyklen kumulierbar ist, so dass ein über mehrere Messzyklen summiertes Sensorsignal auswertbar gebildet ist;
wobei die Speichermittel einen ersten Kondensator (101, 218) mit einer ersten Kapazität und einen Speicherkondensator (106, 221) mit einer zweiten Kapazität aufweisen, wobei der erste Kondensator und der Speicherkondensator derart verschaltet sind, dass eine auf dem ersten Kondensator vorhandene elektrische Ladung über mehrere Messzyklen auf den Speicherkondensator (106, 221) übertragbar und auf diesem kumulativ speicherbar sind.

**2.** Vorrichtung nach Anspruch 1, wobei die erste Kapazität kleiner als die zweite Kapazität ist.

**3.** Vorrichtung nach Anspruch 1 oder 2, wobei der erste Kondensator mit dem Speicherkondensator parallel geschaltet und mindestens eine Verbindung von dem ersten Kondensator zu dem Speicherkondensator schaltbar ist.

**4.** Vorrichtung nach einem der vorhergehenden Ansprüche, wobei der erste Kondensator und der Speicherkondensator jeweils mit Entlademittel entladbar sind.

**5.** Vorrichtung nach einem der vorherigen Ansprüche, wobei die Kompensationsmittel eine Summiereinheit zum Subtrahieren des Hintergrundsignals von dem Sensorsignal aufweisen.

**6.** Vorrichtung nach einem der vorherigen Ansprüche, wobei eine Ablaufsteuereinheit (104, 210) vorgesehen ist, mittels derer das Sensorelement (101,201) zu einem wiederholten Liefern von Sensorsignalen während einer Mehrzahl von Messzyklen ansteuerbar ist.

**7.** Vorrichtung nach Anspruch 6, wobei die Ablaufsteuereinheit derart ausgelegt ist, dass die Speichermittel nach jedem Messzyklus von dem Sensorelement abkoppelbar sind.

**8.** Vorrichtung nach einem der vorherigen Ansprüche, wobei ein dem Sensorelement (101,201) zugeführtes Eingangssignal zur Erzeugung des von einer Kondensation auf der Messoberfläche abhängigen Sensorsignals ein gepulstes und/oder moduliertes Eingangssignal ist.

**9.** Vorrichtung nach einem der vorherigen Ansprüche, wobei das Sensorelement (101) einen Streufeldkondensator umfasst und die Auswertemittel zur Auswertung der von dem Streufeldkondensator (101) infolge eines elektrischen Lade-/Entladevorganges abfließenden elektrischen Ladung ausgelegt sind.

**10.** Vorrichtung nach Anspruch 9, wobei die Kompensationsmittel weiterhin Temperatur- und Drucksensoren umfassen.

**11.** Vorrichtung nach Anspruch 9 oder 10, wobei der Streufeldkondensator (101) der erste Kondensator ist.

**12.** Vorrichtung nach einem der Ansprüche 9 bis 11, wobei der Streufeldkondensator (101) zur Erzeugung der aufeinanderfolgenden Lade-/Entladezyklen über eine Ablaufsteuereinheit (104) mit einer Spannungsquelle, vorzugsweise eine Wechselspannungsquelle (103) koppelbar ist.

**13.** Vorrichtung nach Anspruch 12, wobei der Streufeldkondensator (101) über die Ablaufsteuereinheit (104) derart ansteuerbar ist, dass nur die jeweiligen Scheitelwerte der von der Wechselspannungsquelle (103) gelieferten Spannung an den Streufeldkondensator (101) angelegt sind.

**14.** Vorrichtung nach einem der Ansprüche 1 bis 8, wobei das Sensorelement ein optisches Sensorelement ist, das eine Lichtsendeeinheit und eine Lichtempfängereinheit aufweist, welche über einen Sensorabschnitt des Sensorelementes derart gekoppelt sind, dass das von einer Feuchtigkeitskondensation auf der einen Sensorabschnitt bildenden Messoberfläche anhängige Sensorsignal durch Änderung des Lichttransmissionskoeffizienten der Anordnung bestimmbar ist.

**15.** Vorrichtung nach Anspruch 14, wobei die Lichtsendeeinheit eine gepulste und/oder modulierte Lichtquelle aufweist.

**16.** Vorrichtung nach Anspruch 14 oder 15, wobei die Lichtempfangseinheit einen Demodulierer aufweist.

**17.** Vorrichtung nach einem der Ansprüche 14 bis 16, wobei die Fremdlichtpegel und Grunddämpfungssignale mittels der Kompensationsmittel einzeln messbar und kompensierbar sind.

**18.** Vorrichtung nach Anspruch 17, wobei eine Störgrößenüberwachungseinheit vorgesehen ist, welche einen Meßzyklus verhindert, wenn ein von der Lichtempfängereinheit empfangener, nicht von der Lichtsendeeinheit erzeugter Fremdlichtpegel einen vorbestimmten Schwellenwert überschreitet.

**19.** Vorrichtung nach einem der Ansprüche 14 bis 18, wobei die Kompensationsmittel eine Differenzeinheit umfassen, mittels derer von dem Sensorsignal ein Fremdlichtsignal, welches proportional einem nicht von der Lichtsendeeinheit erzeugten Fremdlichtpegel ist, und/oder ein Grunddämpfungssignal, welches proportional einem Sensorsignal in dessen kondensationsfreien Zustand ist, subtrahierbar ist.

**20.** Verfahren zum Betreiben eines Sensors zur Detektion von Kondensation an einer Meßoberfläche, wobei von einem Sensorelement (101,201) ein in Abhängigkeit von einer Feuchtigkeitskondensation auf der Messoberfläche geliefertes Sensorsignal zum Nachweis eines Kondensationsvorganges ausgewertet wird, wobei ein vom Sensorelement im kondensationsfreien Zustand geliefertes Hintergrundsignal gemessen wird und das gemessene Hintergrundsignal bei der Auswertung des Sensorsignals kompensiert wird, **dadurch gekennzeichnet, dass** das Sensorsignal vor oder nach der Kompensation über eine Mehrzahl von Messzyklen kumuliert wird, um so ein über eine Mehrzahl von Messzyklen summiertes Sensorsignal auswertbar zu bilden, wobei das Sensorsignal als Ladung eines Kondensators (101, 201) ausgebildet und nach einem Messzyklus auf einen Speicherkondensator (106, 221) übertragen und dort über mehrere Messzyklen kumulativ gespeichert wird.

**21.** Verfahren nach Anspruch 20, wobei das Sensorelement (101,201) zu einem wiederholten Liefern von Sensorsignalen während der Mehrzahl von Messzyklen angesteuert wird.

**22.** Verfahren nach Anspruch 20 oder 21, wobei eine Mehrzahl von Sensorsignalen in einem Speichermittel kumulativ gespeichert werden und die Speichermittel nach jedem Messzyklus von dem Sensorelement abgekoppelt werden.

**23.** Verfahren nach einem der Ansprüche 20 bis 22, wobei dem Sensorelement (101,201) zur Erzeugung des von einer Feuchtigkeitskondensation auf dem Sensorelement abhängigen Sensorsignals ein gepulstes und/oder moduliertes Eingangssignal zugeführt wird.

**24.** Verfahren nach einem der Ansprüche 20 bis 23, wobei als Sensorelement ein kapazitives Sensorelement gewählt wird und das von einer Feuchtigkeitskondensation abhängige Sensorsignal durch Auswertung einer Änderung der Dielektrizitätskonstanten ausgewertet wird.

**25.** Verfahren nach einem der Ansprüche 20 bis 24, wobei als Sensorelement ein optisches Sensorelement mit einer Lichtsendeeinheit und einer Lichtempfängereinheit gewählt wird, welche über einen Sensorabschnitt des Sensorelementes derart gekoppelt sind, dass das von einer Feuchtigkeitskondensation auf dem Sensorabschnitt anhängige Sensorsignal durch Änderung des Lichttransmissionskoeffizienten der Anordnung bestimmt wird.

## Claims

**1.** Device for detecting condensation on a measurement surface, having a sensor element (101, 201) for supplying a sensor signal that is dependent on condensation on the measurement surface, and evaluation means, coupled to the sensor element (101, 201), for evaluating a sensor signal supplied from the measurement surface and for detecting a condensation process, wherein the evaluation means comprise compensation means by means of which a background signal supplied to the measurement surface from the sensor element in the condensation-free state can be measured, so that the measured background signal can be compensated for in the evaluation of the sensor signal,
**characterised in that**
the evaluation means further comprise storage means for cumulative storage of the sensor signal supplied by the sensor element (101, 201), by means of which the sensor signal supplied by the sensor element (101, 201) can be cumulated over a plurality of measuring cycles, so that a sensor signal summed over a plurality of measuring cycles is formed such that it can be evaluated, wherein the storage means have a first capacitor (101, 218) with a first capacitance and a storage capacitor (106, 221) with a second capacitance, wherein the first capacitor and the storage capacitor are interconnected in such a manner that an electric charge present on the first capacitor can be transferred to and cumulatively stored on the storage capacitor (106, 221) over a plurality of measuring cycles.

**2.** Device according to claim 1, wherein the first capacitance is smaller than the second capacitance.

**3.** Device according to claim 1 or 2, wherein the first capacitor is connected in parallel to the storage capacitor and at least one connection is switchable from the first capacitor to the storage capacitor.

**4.** Device according to any one of the preceding claims, wherein the first capacitor and the storage capacitor are each dischargeable using discharging means.

**5.** Device according to any one of the preceding claims, wherein the compensation means have a summing unit for subtracting the background signal from the sensor signal.

**6.** Device according to any one of the preceding claims, wherein a sequence control unit (104, 210) is provided by means of which the sensor element (101, 201) can be activated to repeat the supplying of sensor signals during a plurality of measuring cycles.

**7.** Device according to claim 6, wherein the sequence control unit is configured in such a manner that the storage means may be decoupled from the sensor element after each measuring cycle.

**8.** Device according to any one of the preceding claims, wherein an input signal fed to the sensor element (101, 201) to generate the sensor signal that is dependent on condensation on the measurement surface is a pulsed and/or modulated input signal.

**9.** Device according to any one of the preceding claims, wherein the sensor element (101) includes a stray-field capacitor and the evaluation means are configured to evaluate the electric charge flowing from the stray-field capacitor (101) as a result of an electric charging/discharging process.

**10.** Device according to claim 9, wherein the compensation means further include temperature and pressure sensors.

**11.** Device according to claim 9 or 10, wherein the stray-field capacitor (101) is the first capacitor.

**12.** Device according to any one of claims 9 to 11, wherein, to produce the successive charging/discharging cycles, the stray-field capacitor (101) can be coupled *via* a sequence control unit (104) to a voltage source, preferably an ac voltage source (103).

**13.** Device according to claim 12, wherein the stray-field capacitor (101) can be activated *via* the sequence control unit (104) in such a manner that only the respective peak values of the voltage supplied by the ac voltage source (103) are applied to the stray-field capacitor (101).

**14.** Device according to any one of claims 1 to 8, wherein the sensor element is an optical sensor element which has a light-transmitting unit and a light-receiving unit which are coupled to each other *via* a sensor portion of the sensor element in such a manner that the sensor signal that is dependent on moisture condensation on the measurement surface forming a sensor portion can be determined by alteration of the light transmission coefficient of the arrangement.

**15.** Device according to claim 14, wherein the light-transmitting unit has a pulsed and/or modulated light source.

**16.** Device according to claim 14 or 15, wherein the light-receiving unit has a demodulator.

**17.** Device according to any one of claims 14 to 16, wherein the extraneous light levels and background attenuation signals can be individually measured and compensated for by means of the compensation means.

**18.** Device according to claim 17, wherein a disturbance variable monitoring unit is provided which prevents a measuring cycle if an extraneous light level received by the light-receiving unit and not generated by the light-transmitting unit exceeds a predetermined threshold value.

**19.** Device according to any one of claims 14 to 18, wherein the compensation means include a differentiation unit by means of which an extraneous light signal that is proportional to an extraneous light signal not generated by the light-transmitting unit and/or a background attenuation signal that is proportional to a sensor signal in its condensation-free state can be subtracted from the sensor signal.

**20.** Method for operating a sensor for detecting condensation on a measurement surface, wherein a sensor signal supplied in dependence on moisture condensation on the measurement surface is evaluated by a sensor element (101, 201) to detect a condensation process, wherein a background signal supplied by the sensor element in the condensation-free state is measured and the measured background signal is compensated for in the evaluation of the sensor signal, **characterised in that** the sensor signal is cumulated, before or after compensation, over a plurality of measuring cycles in order for a sensor signal summed over a plurality of measuring cycles to be thus formed such that it can be evaluated, wherein the sensor signal is formed as the charge of a capacitor (101, 201) and is transferred, after a measuring cycle, to a storage capacitor (106, 221) and is stored there cumulatively over a plurality of measuring cycles.

**21.** Method according to claim 20, wherein the sensor element (101, 201) is activated to repeat the supplying of sensor signals during the plurality of measuring cycles.

**22.** Method according to claim 20 or 21, wherein a plurality of sensor signals are stored cumulatively in a storage means and the storage means are decoupled from the sensor element after each measuring cycle.

**23.** Method according to any one of claims 20 to 22, wherein a pulsed and/or modulated input signal is fed to the sensor element (101, 201) to produce the sensor signal that is dependent on moisture condensation on the sensor element.

**24.** Method according to any one of claims 20 to 23, wherein a capacitive sensor element is selected as the sensor element and the sensor signal that is dependent on moisture condensation is evaluated by evaluating a change in the dielectric constant.

**25.** Method according to any one of claims 20 to 24, wherein there is selected as the sensor element an optical sensor element having a light-transmitting unit and a light-receiving unit which are coupled *via* a sensor portion of the sensor element in such a manner that the sensor signal that is dependent on moisture condensation on the sensor portion is determined by alteration of the light transmission coefficient of the arrangement.

## Revendications

**1.** Dispositif pour la détection de condensation sur une surface de mesure, comportant un élément de capteur (101, 201) pour la fourniture d'un signal de capteur fonction d'une condensation sur la surface de mesure, et des moyens d'évaluation couplés à l'élément de capteur (101, 201) pour évaluer un signal de capteur fourni par la surface de mesure et pour déceler un phénomène de condensation, les moyens d'évaluation comprenant des moyens de compensation à l'aide desquels peut être mesuré un signal d'arrière-plan fourni par l'élément de capteur à l'état exempt de condensation sur la surface de mesure, de sorte que le signal d'arrière-plan mesuré peut être compensé lors de l'évaluation du signal de capteur, **caractérisé en ce que** les moyens d'évaluation comprennent en outre des moyens de mémorisation pour la mémorisation cumulée du signal de capteur fourni par l'élément de capteur (101, 201), à l'aide desquels le signal de capteur fourni par l'élément de capteur (101, 201) peut être cumulé sur plusieurs cycles de mesure, de sorte qu'est formé un signal de capteur, pouvant être évalué, additionné sur plusieurs cycles de mesure, les moyens de mémorisation présentant un premier condensateur (101, 218) ayant une première capacité et un condensateur de mémorisation (106, 221) ayant une deuxième capacité, le premier condensateur et le condensateur de mémorisation étant câblés de telle manière qu'une charge électrique présente sur le premier condensateur peut être transférée sur plusieurs cycles de mesure sur le condensateur de mémorisation (106, 221) et y être mémorisée de manière cumulée.

**2.** Dispositif selon la revendication 1, **caractérisé en ce que** la première capacité est inférieure à la deuxième capacité.

**3.** Dispositif selon la revendication 1 ou 2, dans lequel le premier condensateur est monté en parallèle avec le condensateur de mémorisation et au moins une connexion peut être commutée du premier condensateur vers le condensateur de mémorisation.

**4.** Dispositif selon une des revendications précédentes, dans lequel le premier condensateur et le condensateur de mémorisation peuvent chacun être déchargés avec des moyens de déchargement.

**5.** Dispositif selon une des revendications précédentes, dans lequel les moyens de compensation présentent une unité d'addition pour soustraire le signal d'arrière-plan du signal de capteur.

**6.** Dispositif selon une des revendications précédentes, dans lequel est prévue une unité de commande séquentielle (104, 210) au moyen de laquelle l'élément de capteur (101, 201) peut être activé pour fournir à répétition des signaux de capteur pendant une pluralité de cycles de mesure.

**7.** Dispositif selon la revendication 6, dans lequel l'unité de commande séquentielle est configurée de telle manière que les moyens de mémorisation peuvent être découplés de l'élément de capteur après chaque cycle de mesure.

**8.** Dispositif selon une des revendications précédentes, dans lequel un signal d'entrée délivré à l'élément de capteur (101, 201) pour la production d'un signal de capteur fonction d'une condensation sur la surface de mesure est un signal d'entrée pulsé et/ou modulé.

**9.** Dispositif selon une des revendications précédentes, dans lequel l'élément de capteur (101) comprend un condensateur à champ de dispersion et les moyens d'évaluation sont configurés pour évaluer la charge électrique s'écoulant du condensateur à champ de dispersion (101) en conséquence d'un phénomène de charge/décharge électrique.

**10.** Dispositif selon la revendication 9, dans lequel les moyens de compensation comprennent en outre des capteurs de température et de pression.

**11.** Dispositif selon la revendication 9 ou 10, dans lequel le condensateur à champ de dispersion (101) est le premier condensateur.

**12.** Dispositif selon une des revendications 9 à 11, dans lequel le condensateur à champ de dispersion (101) peut, pour la production des cycles successifs de charge/décharge, être couplé à une source de tension, de préférence une source de tension alternative (103), par l'intermédiaire d'une unité de commande séquentielle (104).

**13.** Dispositif selon la revendication 12, dans lequel le condensateur à champ de dispersion (101) peut être activé par l'intermédiaire de l'unité de commande séquentielle (104) de telle manière que seules les amplitudes de la tension fournie par la source de tension alternative (103) sont appliquées au condensateur à champ de dispersion (101).

**14.** Dispositif selon une des revendications 1 à 8, dans lequel l'élément de capteur est un élément de capteur optique qui comprend une unité d'émission de lumière et une unité de réception de lumière qui sont couplées à l'élément de capteur par l'intermédiaire d'une section de capteur de telle manière que le signal de capteur fonction d'une condensation d'humidité sur la surface de mesure formant une section de capteur peut être déterminé par la variation du coefficient de transmission de lumière de l'agencement.

**15.** Dispositif selon la revendication 14, dans lequel l'unité d'émission de lumière présente une source lumineuse pulsée et/ou modulée.

**16.** Dispositif selon la revendication 14 ou 15, dans lequel l'unité de réception de lumière présente un démodulateur.

**17.** Dispositif selon une des revendications 14 à 16, dans lequel le niveau de lumière étrangère et le signal d'amortissement résiduel peuvent être mesurés et compensés individuellement à l'aide des moyens de compensation.

**18.** Dispositif selon la revendication 17, dans lequel est prévue une unité de surveillance des grandeurs perturbatrices, qui empêche un cycle de mesure si le niveau de la lumière étrangère reçue par l'unité de réception de lumière, non émise par l'unité d'émission de lumière, dépasse une valeur seuil prédéterminée.

**19.** Dispositif selon une des revendications 14 à 18, dans lequel les moyens de compensation comprennent une unité de différentiation au moyen de laquelle un signal de lumière étrangère qui est proportionnel à un niveau de lumière étrangère non émise par l'unité d'émission de lumière, et/ou un signal d'amortissement résiduel qui est proportionnel à un signal de capteur à son état exempt de condensation, peuvent être soustraits du signal de capteur.

**20.** Procédé d'utilisation d'un capteur pour la détection de condensation sur une surface de mesure, dans lequel un signal de capteur fourni par un élément de capteur (101, 201) en fonction d'une condensation d'humidité sur la surface de mesure est évalué pour déceler un phénomène de condensation, dans lequel un signal d'arrière-plan fourni par l'élément de capteur à l'état exempt de condensation est mesuré, et le signal d'arrière-plan mesuré est compensé lors de l'évaluation du signal de capteur, **caractérisé en ce qu'**avant ou après la compensation, le signal de capteur est cumulé sur une pluralité de cycles de mesure, pour former un signal de capteur pouvant être évalué additionné sur une pluralité de cycles de mesure, moyennant quoi le signal de capteur est réalisé sous la forme d'une charge d'un condensateur (101, 202), est transféré sur un condensateur de mémorisation (106, 221) après un cycle de mesure, et y est mémorisé de manière cumulée sur plusieurs cycles de mesure.

**21.** Procédé selon la revendication 20, dans lequel l'élément de capteur (101, 201) est activé pour fournir des signaux de capteur à répétition pendant la pluralité de cycles de mesure.

**22.** Procédé selon la revendication 20 ou 21, dans lequel une pluralité de signaux de capteur est mémorisée de manière cumulée dans un moyen de mémorisation, et les moyens de mémorisation sont découplés de l'élément de capteur après chaque cycle de mesure.

**23.** Procédé selon une des revendications 20 à 22, dans lequel un signal d'entrée pulsé et/ou modulé est délivré à l'élément de capteur (101, 201) pour la production du signal de capteur fonction d'une condensation d'humidité sur l'élément de capteur.

**24.** Procédé selon une des revendications 20 à 23, dans lequel on choisit comme élément de capteur un élément de capteur capacitif et dans lequel le signal de capteur fonction d'une condensation d'humidité est évalué par l'évaluation d'une variation des constantes diélectriques.

**25.** Procédé selon une des revendications 20 à 24, dans lequel on choisit comme élément de capteur un élément de capteur optique comportant une unité d'émission de lumière et une unité de réception de lumière, qui sont couplées par l'intermédiaire d'une section de capteur de l'élément de capteur de telle manière que le signal de capteur fonction d'une condensation d'humidité sur la section de capteur est déterminé par une variation du coefficient de transmission de lumière de l'agencement.

Fig. 1
100
102
101
105
106
107
108
109
110
111
112
K
113
114
104
103
u(x)
u(x)dig
ucomp